# EUROPEAN PATENT SPECIFICATION

(11) **EP 3 739 936 B1**
(45) Date of publication and mention of the grant of the patent: **02.03.2022**
(21) Application number: 18899281.2
(22) Date of filing: 09.01.2018
(51) Int. Cl.: H04W 24/10, H04B 7/06, H04W 36/00, H04W 36/08, H04W 88/08, H04W 88/02, H04W 72/04

(54) **CELL HANDOVER METHOD, ACCESS NETWORK DEVICE AND TERMINAL DEVICE**
VERFAHREN FÜR ZELLEN-HANDOVER, ZUGANGSNETZWERKVORRICHTUNG UND ENDGERÄTEVORRICHTUNG
PROCÉDÉ DE TRANSFERT CELLULAIRE, DISPOSITIF DE RÉSEAU D'ACCÈS, ET DISPOSITIF DE TERMINAL

(43) Date of publication of application: 18.11.2020
(73) Proprietor: Guangdong OPPO Mobile Telecommunications Corp., Ltd., Wusha, Chang'an Dongguan Guangdong 523860 (CN)
(72) Inventor: YANG, Ning, Dongguan Guangdong 523860 (CN)
(74) Representative: RGTH
(86) International application number: PCT/CN2018/071982
(87) International publication number: WO 2019/136611

(56) References cited:
- WO-A1-2017/180258
- WO-A1-2017/191919
- CN-A- 103 096 372
- CN-A- 104 285 385
- CN-A- 104 955 061
- US-A1- 2003 114 196
- US-A1- 2013 155 847
- ZTE CORPORATION ET AL: "Discussion on the support of MBB and RACH-less in NR", 3GPP DRAFT; R2-1712603 DISCUSSION ON THE SUPPORT OF MBB AND RACH-LESS IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Reno, USA; 20171127 - 20171201 16 November 2017 (2017-11-16), XP051371181, Retrieved from the Internet: URL:http://www.3gpp.org/ftp/tsg%5Fran/WG2% 5FRL2/TSGR2%5F100/Docs/ [retrieved on 2017-11-16]
- INTEL CORPORATION: "Frame Structure for NR unlicensed operation", 3GPP DRAFT; R1-1609508 INTEL NR UNLICENSED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149547, Retrieved from the Internet: URL:http://www.3gpp.org/ftp/Meetings_3GPP_ SYNC/RAN1/Docs/ [retrieved on 2016-10-09]
- "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 22 December 2017 (2017-12-22), pages 1-258, XP051392102, [retrieved on 2017-12-22]
- "3rd Generation Partnership Project; Technical Specification Group Radio Access Network; Evolved Universal Terrestrial Radio Access (E-UTRA); Radio Resource Control (RRC); Protocol specification (Release 15)", 3GPP DRAFT; DRAFT_36331-F00_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 January 2018 (2018-01-05), XP051385516, Retrieved from the Internet: URL:http://www.3gpp.org/ftp/tsg%5Fran/WG2% 5FRL2/Specifications/201712%5Fdraft%5Fspec s%5Fafter%5FRAN%5F78/ [retrieved on 2018-01-05]

## Description

### TECHNICAL FIELD

The disclosure relates to the field of communication, and more particularly to a method of cell handover and an access network device. The related art can be known from the following documents: (1) ZTE CORPORATION ET AL: "Discussion on the support of MBB and RACH-less in NR", 3GPP DRAFT; R2-1712603 DISCUSSION ON THE SUPPORT OF MBB AND RACH-LESS IN NR, 3RD GENERATION PARTNERSHIP PROJECT (3GPP), MOBILE COMPETENCE CENTRE; 650 ROUTE DES LUCIOLES; F-06921 SOPHIAANTIPOLIS CE, vol. RAN WG2, no. Reno, USA; 20171127 - 20171201 16 November 2017, XP051371181; (2) INTEL CORPORATION: "Frame Structure for NR unlicensed operation", 3GPP DRAFT; R1-1609508 INTEL NR UNLICENSED, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Lisbon, Portugal; 20161010 - 20161014 9 October 2016, XP051149547; (3) "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE vol. SA WG2, no. V15.0.0, 22 December 2017, pages 1-258, XP051392102; (4) WO 2017/191919A1; (5) WO 2017/180258A1; (6) US2003/114196A1 and (7) "3rd Generation Partnership Project; Technical Specification Group Radio Access Network; Evolved Universal Terrestrial Radio Access (E-UTRA); Radio Resource Control (RRC); Protocol specification (Release 15)",3GPP DRAFT; DRAFT_36331-F00_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 5 January 2018.

In particular, (1) discloses an intra-NR RACH-less handover wherein the source base station provides beam measurement information to the target base station and the latter responds in the handover acknowledgement with specific beam information that includes timing adjustment and preallocated uplink grant for accessing the target cell.

Document (6) discloses a handover wherein the source base station negotiates with multiple candidate target base stations to select a preferred beam allocation pattern; each target base station determines a directed beam according to the UE location and velocity and according to the power and shape of the beams.

### BACKGROUND

In a Long Term Evolution (LTE) communication system, for cell handover of a Random Access Channel Less (RACH-less) flow, in a handover process of a terminal device from a source cell to a target cell, a target access network device (target eNB) configures an uplink resource through which the terminal device sends a Radio Resource Control (RRC) reconfiguration completion message to the target access network device in a handover command. In fifth-Generation New Radio (5G NR), a target cell may support multi-beam communication. However, under a multi-beam condition, a target Random Access Channel (RACH) resource is related to a beam. Consequently, according to the RACH-less flow in LTE, a terminal device cannot determine a beam for sending an RRC reconfiguration completion message to a target access network device and an uplink resource on the beam.

In "Discussion on the support of MBB and RACH-less in NR", the aspects that were FFS (i.e. whether the mobility enhancement in LTE, e.g. MBB and RACH less handover introduced in LTE R14 should be supported in R15 and if supported, whether some exceptions should be introduced for the basic handover procedure) are discussed. In "Frame Structure for NR unlicensed operation", forward compatibility considerations for the NR Phase I design is discussed to enable hassle-free NR operation in unlicensed spectrum, and other unlicensed spectrum that can be also considered for NR to operate is explored. Regarding "3rd Generation Partnership Project; Technical Specification Group Services and System Aspects; Procedures for the 5G System; Stage 2 (Release 15)", the document defines the Stage 2 procedures and Network Function Services for the 5G system architecture and for the policy and charging control framework.

In WO 2017/191919A1, there is provided a method for a terminal controlling uplink power in a rando access channel-less (RACH-less) handover. The method may comprise the steps of: receiving, from a source base station, an RRC comection reconfiguration message including an uplink grant; transmitting, to a target base station using a first transmission power, an RRC connection reconfiguration complete message, on the basis of the uplink grant; receiving, from the target base station, a NACK corresponding to the RRC connection reconfiguration complete message; ramping the first transmission power to a second transmission power, and transmitting the RRC connection recontiguration complete message using the ramped second transmission power.

In WO 2017/180258A1, techniques for continued data transmission during handover operations are described. In one embodiment, an apparatus may comprise processing circuitry and computer-readable storage media having stored thereon instructions for execution by the processing circuitry to receive, at a source evolved node B (eNB), a measurement report from a user equipment (UE). The source eNB may send a handover request indicating handover capabilities of the UE to a target eNB. The source eNB may receive a handover acknowledgment from the target eNB, the handover acknowledgement including an uplink grant schedule. The source eNB may send a handover command to the UE, the handover command including the uplink grant schedule. The source eNB may stop a data transmission by the source eNB to the UE based upon an indication that a handover operation is complete.

### SUMMARY

Embodiments of the disclosure provide a method of cell handover, and an access network device. In cell handover of a RACH-less flow, a terminal device may acquire a beam for sending an RRC reconfiguration completion message and monitoring a Physical Downlink Control Channel (PDCCH), and an uplink resource on the beam, so that a delay in a cell handover process may be reduced, and service performance of 5G NR communication may further be met.

The features of the method and device according to the present disclosure are defined in the independent claims, and the preferable features according to the present invention are defined in the dependent claims.

### BRIEF DESCRIPTION OF THE DRAWINGS

FIG. 1 is a schematic diagram of an application scenario.
FIG. 2 is a schematic flowchart of a method of cell handover not being part of the invention.
FIG. 3 is a schematic flowchart of a method of cell handover not being part of the invention.
FIG. 4 is a schematic flowchart of a method of cell handover according to the invention.
FIG. 5 is a schematic diagram of cell handover not being part of the invention.
FIG. 6 is a schematic block diagram of an access network device not being part of the invention.
FIG. 7 is a schematic block diagram of another access network device not being part of the invention.
FIG. 8 is a schematic block diagram of a terminal device not being part of the invention.
FIG. 9 is a schematic block diagram of a communication device not being part of the invention.
FIG. 10 is a schematic structure diagram of a system chip not being part of the invention.

### DETAILED DESCRIPTION

The technical solutions in the embodiments of the disclosure will be clearly and completely described below in combination with the drawings in the embodiments of the disclosure.

The technical solutions of the embodiments of the disclosure may be applied to a 5G NR communication system.

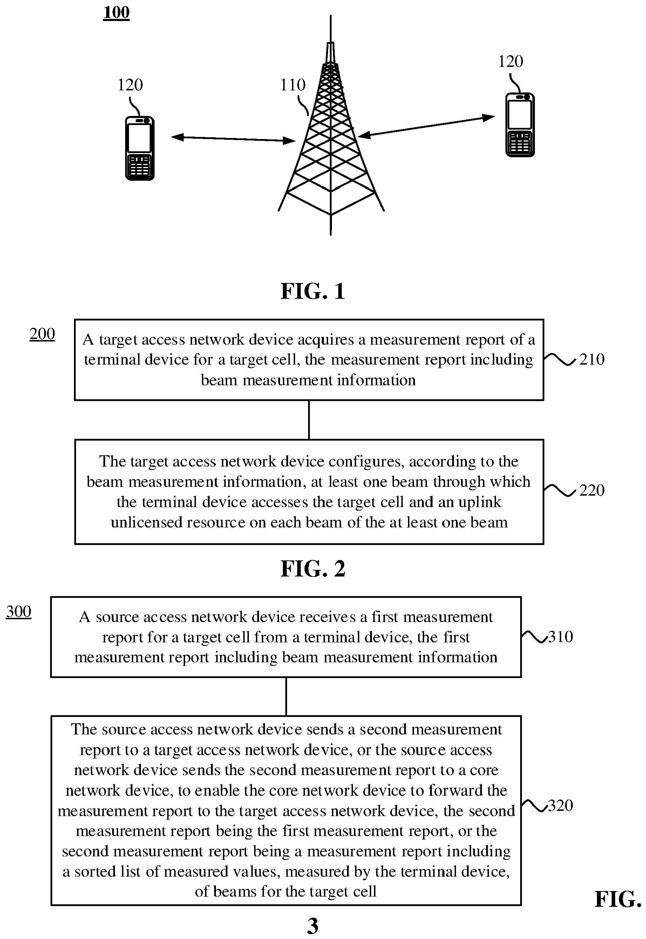

FIG. 1 is a schematic diagram of an application scenario.

As illustrated in FIG. 1, the wireless communication system 100 may include an access network device 110. The access network device 110 may be a device communicating with a terminal device. The access network device 110 may provide communication coverage for a specific geographical region and may communicate with a terminal device (for example, User Equipment (UE)) located within the coverage area. Optionally, the access network device 110 may be a gNB in an NR system or a wireless controller in a Cloud Radio Access Network (CRAN). Or the network device may be a relay station, an access point, a vehicle device, a wearable device or a network device in a future evolved Public Land Mobile Network (PLMN), etc.

The wireless communication system 100 further includes at least one terminal device 120 located within the coverage area of the access network device 110. The terminal device 120 may be mobile or fixed. Optionally, the terminal device 120 may refer to an access terminal, UE, a user unit, a subscriber station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, other processing devices connected to a wireless modem, a vehicle device, a wearable device, a terminal device in a future 5G network, a terminal device in the future evolved PLMN or the like.

An access network device and two terminal devices are exemplarily illustrated in FIG. 1. Optionally, the wireless communication system 100 may include a plurality of access network devices, and another number of terminal devices may be included in the coverage range of each access network device. There are no limits made thereto in the embodiments of the disclosure.

Optionally, the wireless communication system 100 may further include other network entities such as an Access and Mobility Management Function (AMF), a Session Management Function (SMF), Unified Data Management (UDM) and an Authentication Server Function (AUSF). There are no limits made thereto in the embodiments of the disclosure.

It is to be understood that terms "system" and "network" in the disclosure may usually be used interchangeably in the disclosure. In the disclosure, term "and/or" is only an association relationship describing associated objects and represents that three relationships may exist. For example, A and/or B may represent three conditions: i.e., independent existence of A, existence of both A and B, and independent existence of B. In addition, character "/" in the disclosure usually represents that previous and next associated objects form an "or" relationship.

FIG. 2 is a schematic flowchart of a method of cell handover 200 not being part of the invention. As illustrated in FIG. 2, the method 200 may be executed by a target access network device. The target access network device may be an access network device illustrated in FIG. 1. A terminal device in the method 200 may be a terminal device illustrated in FIG. 1. A source access network device in the method 200 may be an access network device illustrated in FIG. 1. The method 200 is applied to cell handover of a RACH-less flow in a 5G communication system, the terminal device being required to be handed over from a source cell to a target cell, and the target cell supporting multi-beam communication. The method 200 includes the following operations.

In block 210, the target access network device acquires a measurement report of the terminal device for the target cell, the measurement report including beam measurement information.

It is to be understood that the source access network device serves the source cell and the target access network device serves the target cell.

Optionally, the beam measurement information includes beam identification information and a measured value of a beam identified by the beam identification information.

For example, the beam measurement information includes the following contents.

A measured value of Beam D1 is a, a measured value of Beam D2 is b, a measured value of Beam D3 is c, and a measured value of Beam D4 is d.

Optionally, the beam measurement information includes a sorted list of measured values, measured by the terminal device, of beams for the target cell.

For example, the beam measurement information includes the following contents:
1, Beam D2;
2, Beam D1;
3, Beam D3; and
4, Beam D4.

The target access network device may acquire, according to the above information, that the measured value of the Beam D2>the measured value of the Beam D1>the measured value of the Beam D3>the measured value of the Beam D4, or

the target access network device may acquire, according to the above information, that the measured value of the Beam D2<the measured value of the Beam D1<the measured value of the Beam D3<the measured value of the Beam D4.

Specifically, the target access network device may receive the measurement report sent by the source access network device through an Xn interface.

For example, the target access network device receives a handover request sent by the source access network device through the Xn interface, the handover request including the measurement report.

Optionally, the Xn interface may be an X2 interface.

It is to be understood that the Xn interface connects the source access network device with the target access network device.

Specifically, the target access network device receives the measurement report forwarded by a core network device from the source access network device through an NG interface.

The core network device is an AMF

The target access network device receives a handover preparation message sent by the AMF through the NG interface, the handover preparation message including the measurement report.

Optionally, an interface between the access network device and a core network device may also be an S1 interface.

It is to be understood that the NG interface connects the access network device (for example, the source access network device, or the target access network device) with the core network device.

In block 220, the target access network device configures, according to the beam measurement information, at least one beam through which the terminal device accesses the target cell and an uplink unlicensed resource on each beam of the at least one beam.

Optionally, the method 200 further includes that: the target access network device configures time-domain information of the uplink unlicensed resource on each beam used by the terminal device.

Optionally, the time-domain information includes at least one of an SF serial number, an SFN range or a time window.

Accordingly, the target access network device further configures, based on configuring the at least one beam through which the terminal device accesses the target cell and configuring the uplink unlicensed resource on each beam of the at least one beam, the time-domain information of the uplink unlicensed resource on each beam used by the terminal device, so that the terminal device may send an RRC reconfiguration completion message and monitor a PDCCH by using the uplink unlicensed resource on the at least one beam more effectively.

Optionally, the method 200 further includes that: the target access network device sends a handover command to the source access network device, the handover command including an identifier of the at least one beam, the uplink unlicensed resource on each beam of the at least one beam, and the time-domain information of the uplink unlicensed resource on each beam of the at least one beam used by the terminal device.

According to the invention, the target access network device, when configuring the at least one beam through which the terminal device accesses the target cell, further combines a moving speed of the terminal device and a coverage range of the beam for the target cell measured by the terminal device.

Specifically, the target access network device configures the at least one beam according to the beam measurement information, the moving speed of the terminal device and the coverage range of the beam for the target cell measured by the terminal device.

The target access network device, when configuring the at least one beam, comprehensively considers the beam measurement information, the moving speed of the terminal device and the coverage range of the beam for the target cell measured by the terminal device, so that the terminal device may determine the beam for sending the RRC reconfiguration completion message and monitoring the PDCCH more accurately.

Accordingly, in the method of cell handover of the invention, the target access network device configures, according to the beam measurement information in the measurement report of the terminal device for the target cell, the at least one beam through which the terminal device accesses the target cell and the uplink unlicensed resource on each beam of the at least one beam, so that the terminal device may acquire the beam for sending an RRC reconfiguration completion message and monitoring a PDCCH, and the uplink unlicensed resource on the beam. Furthermore, a delay in a cell handover process may be reduced, and service performance of 5G NR communication may be met.

FIG. 3 is a schematic flowchart of a method of cell handover 300 not being part of the invention. As illustrated in FIG. 3, the method 300 may be executed by a source access network device. The source access network device may be an access network device illustrated in FIG. 1. A terminal device in the method 300 may be a terminal device illustrated in FIG. 1. A target access network device in the method 300 may be an access network device illustrated in FIG. 1. The method 300 is applied to cell handover of a RACH-less flow in a 5G communication system, the terminal device being required to be handed over from a source cell to a target cell, and the target cell supporting multi-beam communication. The method 300 includes the following operations.

In block 310, the source access network device receives a first measurement report for the target cell from the terminal device, the first measurement report including beam measurement information.

In block 320, the source access network device sends a second measurement report to the target access network device, or the source access network device sends the second measurement report to a core network device, to enable the core network device to forward the measurement report to the target access network device, the second measurement report being the first measurement report, or the second measurement report being a measurement report including a sorted list measured values, measured by the terminal device of beams for the target cell.

Specifically, the source access network device may send a handover request to the target access network device through an Xn interface, the handover request including the second measurement report.

Specifically, the source access network device may send the second measurement report to the core network device, to enable the core network device to send a handover preparation message to the target access network device through an NG interface, the handover preparation message including the second measurement report.

Optionally, the method 300 further includes the following operations.

The source access network device receives a handover command sent by the target access network device, the handover command including an identifier of at least one beam, an uplink unlicensed resource on each beam of the at least one beam, and time-domain information of the uplink unlicensed resource on each beam of the at least one beam used by the terminal device, wherein the at least one beam and the uplink unlicensed resource on each beam of the at least one beam are determined according to the beam measurement information.

The source access network device sends the handover command to the terminal device.

Optionally, the time-domain information includes at least one of an SF serial number, an SFN range or a time window.

Optionally, the beam measurement information includes beam identification information and a measured value of a beam which is identified by the beam identification information.

Optionally, before the operation that the source access network device receives the first measurement report from the terminal device, the method 300 further includes the following operation.

The source access network device sends measurement configuration information to the terminal device, the measurement configuration information indicating the terminal device to measure the target cell and report the first measurement report.

It is to be understood that the method of cell handover 300 corresponds to the corresponding steps in the method 200. The steps in the method of cell handover 300 may refer to descriptions about the corresponding steps in the method of cell handover 200 and, for simplicity, will not be elaborated herein.

Accordingly, in the method of cell handover, the source access network device sends the second measurement report to the target access network device. The target access network device configures, according to the beam measurement information or a sorted list of measured values, measured by the terminal device, of beams for the target cell in the second measurement report, the at least one beam through which the terminal device accesses the target cell and the uplink unlicensed resource on each beam of the at least one beam, so that the terminal device may acquire the beam for sending an RRC reconfiguration completion message and monitoring a PDCCH, and the uplink unlicensed resource on the beam. Furthermore, a delay in a cell handover process may be reduced, and service performance of 5G NR communication may be met.

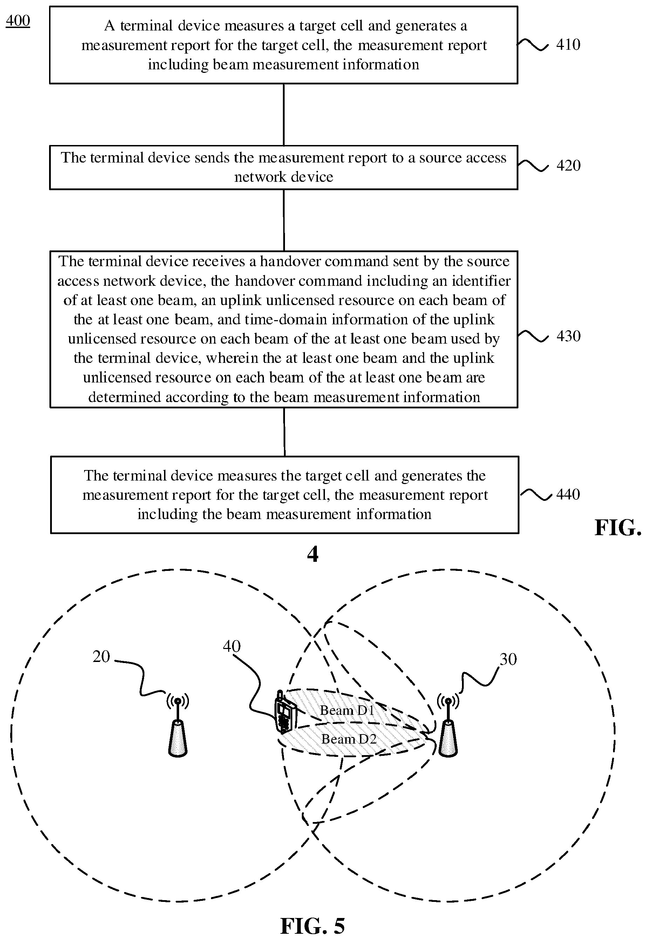

FIG. 4 is a schematic flowchart of a method of cell handover 400 according to the invention. As illustrated in FIG. 4, the method 400 may be executed by a terminal device. The terminal device may be a terminal device illustrated in FIG. 1. A source access network device in the method 300 may be an access network device illustrated in FIG. 1. The method 400 is applied to cell handover of a RACH-less flow in a 5G communication system, the terminal device being required to be handed over from a source cell to a target cell, and the target cell supporting multi-beam communication. The method 400 includes the following operations.

In block 410, the terminal device measures the target cell and generates a measurement report for the target cell, the measurement report including beam measurement information.

In block 420, the terminal device sends the measurement report to the source access network device.

In block 430, the terminal device receives a handover command sent by the source access network device, the handover command including an identifier of at least one beam, an uplink unlicensed resource on each beam of the at least one beam, and time-domain information of the uplink unlicensed resource on each beam of the at least one beam used by the terminal device, wherein the at least one beam and the uplink unlicensed resource on each beam of the at least one beam are determined according to the beam measurement information.

In block 440, the terminal device, according to the handover command, sends an RRC reconfiguration completion message on the at least one beam, and/or monitors a PDCCH on the at least one beam.

Optionally, the beam measurement information includes beam identification information and a measured value of the beam which is identified by the beam identification information.

Optionally, the time-domain information includes at least one of an SF serial number, an SFN range or a time window.

It is to be understood that the method of cell handover 400 corresponds to the corresponding steps in the method 200. The steps in the method of cell handover 400 may refer to descriptions about the corresponding steps in the method of cell handover 200 and, for simplicity, will not be elaborated herein.

Accordingly, in the method of cell handover, the terminal device may acquire the beam for sending the RRC reconfiguration completion message and monitoring the PDCCH, and the uplink unlicensed resource on the beam according to the at least one cell through which the terminal device accesses the target cell and uplink unlicensed resource configured on each beam of the at least one beam in the handover command. Furthermore, a delay in a cell handover process may be reduced, and service performance of 5G NR communication may be met.

Optionally, as illustrated in FIG. 5, a terminal device 40 is handed over from a source cell to a target cell. A source access network device 20 serves the source cell, a target access network device 30 serves the target cell, and the target cell supports multi-beam communication. A specific process is illustrated in a method 500.

In block 501, the source access network device 20 sends measurement configuration information to the terminal device 40, the measurement configuration information indicating the terminal device 40 to measure the target cell and report a measurement report for the target cell.

In block 502, the terminal device 40 measures the target cell and generates the measurement report for the target cell, the measurement report including beam measurement information.

For example, as illustrated in FIG. 5, the terminal device 40 measures the target cell, and the measurement report includes measured information for Beam D1 and Beam D2.

In block 503, the terminal device 40 sends the measurement report to the source access network device 20.

In block 504, the source access network device 20 forwards the measurement report to the target access network device 30.

In block 505, the source access network device 20 sorts the measured values, measured by the terminal device which are in the beam measurement information, of beams for the target cell to generate a sorted list, and the source access network device 20 sends the measurement report including the sorted list to the target access network device 30.

It is to be understood that the access network device 20 may execute the operation in block 504 or 505.

Specifically, the target access network device 30 may receive the measurement report sent by the source access network device 20 through an Xn interface.

For example, the target access network device 30 receives a handover request sent by the source access network device 20 through the Xn interface, the handover request including the measurement report.

Optionally, the Xn interface may be an X2 interface.

It is to be understood that the Xn interface connects the source access network device 20 with the target access network device 30.

Specifically, the target access network device 30 receives the measurement report forwarded by a core network device from the source access network device 20 through an NG interface.

The core network device is an AMF

The target access network device 30 receives a handover preparation message sent by the AMF through the NG interface, the handover preparation message including the measurement report.

Optionally, an interface between the access network device and a core network may also be an S1 interface.

It is to be understood that the NG interface connects the access network device (for example, the source access network device, or the target access network device) with the core network device.

In block 506, the target access network device 30 acquires the report of measurement on the target cell made by the terminal device 40, the measurement report including the beam measurement information.

In block 507, the target access network device 30, according to the beam measurement information, configures at least one beam through which the terminal device accesses the target cell and configures an uplink unlicensed resource on each beam of the at least one beam.

Optionally, the target access network device 30 may further configure time-domain information of the uplink unlicensed resource on each beam used by the terminal device 40.

Optionally, the time-domain information includes at least one of an SF serial number, an SFN range or a time window.

In block 508, the target access network device 30 sends a handover command to the source access network device 20.

The handover command includes an identifier of the at least one beam, the uplink unlicensed resource on each beam of the at least one beam, and the time-domain information of the uplink unlicensed resource on each beam of the at least one beam used by the terminal device.

In block 509, the source access network device 20 forwards the handover command received from the target access network device 30 to the terminal device 40.

In block 510, the terminal device 40, according to the handover command, sends an RRC reconfiguration completion message on the at least one beam and/or monitors a PDCCH on the at least one beam.

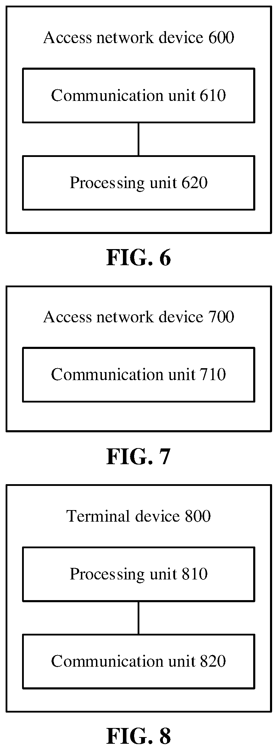

FIG. 6 is a schematic block diagram of an access network device 600 not being part of the invention. As illustrated in FIG. 6, the access network device 600 is applied to cell handover of a RACH-less flow in a 5G communication system, a terminal device being required to be handed over from a source cell to a target cell, and the target cell supporting multi-beam communication. The access network device 600 includes a communication unit 610 and a processing unit 620. The communication unit 610 is configured to acquire a measurement report of the terminal device for the target cell, the measurement report including beam measurement information. The processing unit 620 is configured to configure, according to the beam measurement information, at least one beam through which the terminal device accesses the target cell and an uplink unlicensed resource on each beam of the at least one beam.

It is to be understood that the access network device 600 may correspond to the target access network device in the method 200. The access network device 600 may implement corresponding operations implemented by the target access network device in the method 200 and, for simplicity, will not be elaborated herein.

FIG. 7 is a schematic block diagram of an access network device 700 not being part of the invention. As illustrated in FIG. 7, the access network device 700 is applied to cell handover of a RACH-less flow in a 5G communication system, a terminal device being required to be handed over from a source cell to a target cell, and the target cell supporting multi-beam communication. The access network device 700 includes a communication unit 710. The communication unit 710 is configured to receive a first measurement report for the target cell from the terminal device, the first measurement report including beam measurement information. The communication unit 710 is further configured to send a second measurement report to a target access network device, or send the second measurement report to a core network device, to enable the core network device to forward the measurement report to the target access network device, the second measurement report being the first measurement report, or the second measurement report being a measurement report including a sorted list of measured values of beams for the target cell measured by the terminal device.

It is to be understood that the access network device 700 may correspond to the source access network device in the method 300. The access network device 700 may implement corresponding operations implemented by the source access network device in the method 300 and, for simplicity, will not be elaborated herein.

FIG. 8 is a schematic block diagram of a terminal device 800 not being part of the invention. As illustrated in FIG. 8, the terminal device 800 is applied to cell handover of a RACH-less flow in a 5G communication system, the terminal device being required to be handed over from a source cell to a target cell, and the target cell supporting multi-beam communication. The terminal device 800 includes a processing unit 810 and a communication unit 820. The processing unit 810 is configured to measure the target cell and generate a measurement report for the target cell, the measurement report including beam measurement information. The communication unit 820 is configured to send the measurement report to a source access network device. The communication unit 820 is further configured to receive a handover command sent by the source access network device, the handover command including an identifier of at least one beam, an uplink unlicensed resource on each beam of the at least one beam, and time-domain information of the uplink unlicensed resource on each beam of the at least one beam used by the terminal device, wherein the at least one beam and the uplink licensed resource on each beam of the at least one beam are determined according to the beam measurement information. The processing unit 810 is further configured to, according to the handover command, send an RRC reconfiguration completion message on the at least one beam, and/or monitor a PDCCH on the at least one beam.

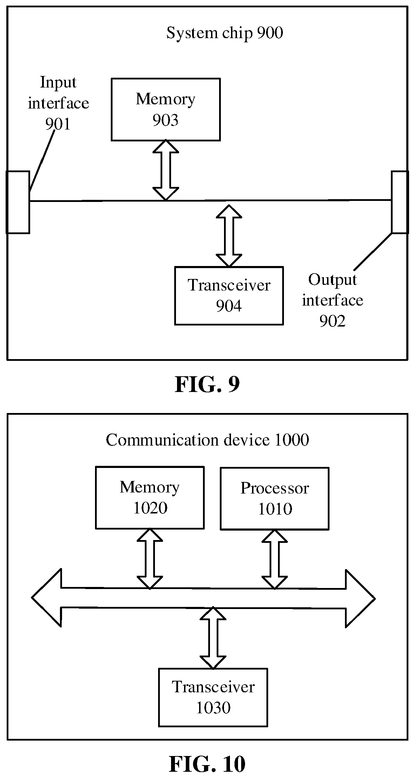

FIG. 9 is a schematic structure diagram of a system chip 900 not being part of the invention. The system chip 900 of FIG. 9 includes an input interface 901, output interface 902, processor 903 and memory 904 which may be connected through an internal communication connecting line. The processor 903 is configured to execute a code in the memory 904.

Optionally, when the code is executed, the processor 903 implements the method executed by the target access network device in the method 200. For simplicity, elaborations are omitted herein.

Optionally, when the code is executed, the processor 903 implements the method executed by the source access network device in the method 300. For simplicity, elaborations are omitted herein.

Optionally, when the code is executed, the processor 903 implements the method executed by the terminal device in the method 400. For simplicity, elaborations are omitted herein.

FIG. 10 is a schematic block diagram of a communication device 1000 not being part of the invention. As illustrated in FIG. 10, the communication device 1000 includes a processor 1010 and a memory 1020. Herein, the memory 1020 may store a program code, and the processor 1010 may execute the program code stored in the memory 1020.

Optionally, as illustrated in FIG. 10, the communication device 1000 may include a transceiver 1030, and the processor 1010 may control the transceiver 1030 for external communication.

Optionally, the processor 1010 may call the program code stored in the memory 1020 to execute corresponding operations of the target access network device in the method 200. For similarity, elaborations are omitted herein.

Optionally, the processor 1010 may call the program code stored in the memory 1020 to execute corresponding operations of the source access network device in the method 300. For similarity, elaborations are omitted herein.

Optionally, the processor 1010 may call the program code stored in the memory 1020 to execute corresponding operations of the terminal device in the method 400. For similarity, elaborations will be omitted herein.

It is to be understood that the processor in the embodiment of the disclosure may be an integrated circuit chip and has a signal processing capability. In an implementation process, each step of the method embodiment may be completed by an integrated logical circuit of hardware in the processor or instructions in a software form. The processor may be a universal processor, a Digital Signal Processor (DSP), an Application Specific Integrated Circuit (ASIC), a Field Programmable Gate Array (FPGA) or other programmable logical devices, discrete gate or transistor logical device and discrete hardware component. Each method, step and logical block diagram disclosed in the embodiments of the disclosure may be implemented or executed. The universal processor may be a microprocessor or the processor may also be any conventional processor and the like. The steps of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure are intended to include, but not limited to, memories of these and any other proper types.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, a plurality of units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to a plurality of network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

## Claims

1. A method for cell handover of a Random Access Channel Less, RACH-less, flow in a fifth-generation mobile communication technology, 5G, communication system, for a terminal device being required to be handed over from a source cell to a target cell supporting multi-beam communication wherein a source access network device serves the source cell and a target access network device serves the target cell, the method comprising
acquiring (210), by the target access network device, a handover preparation message sent by an Access and Mobility Management Function, AMF, through a Next-Generation, NG, interface, the handover preparation message comprising a measurement report, and the measurement report comprising beam measurement information; and
configuring (220), by the target access network device, according to the beam measurement information, at least one beam through which the terminal device accesses the target cell and an uplink unlicensed resource on each beam of the at least one beam; wherein the configuring of the at least one beam is according to the beam measurement information, the moving speed of the terminal device and the coverage range of the beam of the target cell measured by the terminal device;
wherein the method further comprises:
configuring, by the target access network device, time-domain information of the uplink unlicensed resource on each beam used by the terminal device; and
wherein the method further comprises:
sending, by the target access network device, a handover command to a source access network device, the handover command comprising an identifier of the at least one beam, the uplink unlicensed resource on each beam of the at least one beam, and the time-domain information of the uplink unlicensed resource on each beam of the at least one beam used by the terminal device.

2. The method of claim 1, wherein the time-domain information comprises at least one of a Sub Frame, SF, serial number, a System Frame Number, SFN, range or a time window.

3. The method of claim 1 or 2, wherein the beam measurement information comprises beam identification information and a measured value of a beam which is identified by the beam identification information.

4. An access network device (600), arranged to perform cell handover of a Random Access Channel Less, RACH-less, flow in a fifth-generation mobile communication technology, 5G, communication system, for terminal device being required to be handed over from a source cell to a target cell supporting multi-beam communicatior wherein a source access network device serves the source cell and the access network device (600) serves the target cell, the access network device (600) comprising:
a communication unit (610), configured to acquire a handover preparation message sent by an Access and Mobility Management Function, AMF, through a Next-Generation, NG, interface, the handover preparation message comprising a measurement report, the measurement report comprising beam measurement information; and
a processing unit (620), configured to configure, according to the beam measurement information, at least one beam through which the terminal device accesses the target cell and an uplink unlicensed resource on each beam of the at least one beam, wherein the configuring of the at least one beam is according to the beam measurement information, the moving speed of the terminal device and the coverage range of the beam of the target cell measured by the terminal device;
wherein the processing unit (620) is further configured to configure time-domain information of the uplink unlicensed resource on each beam used by the terminal device; and
wherein the communication unit (610) is further configured to send a handover command to a source access network device, the handover command comprising an identifier of the at least one beam, the uplink unlicensed resource on each beam of the at least one beam, and the time-domain information of the uplink unlicensed resource on each beam of the at least one beam used by the terminal device.

5. The access network device (600) of claim 4, wherein the time-domain information comprises at least one of a Sub Frame, SF, serial number, a System Frame Number, SFN, range or a time window.

6. The access network device (600) of claim 4 or 5, wherein the beam measurement information comprises beam identification information and a measured value of a beam which is identified by the beam identification information.

## Patentansprüche

1. Verfahren zur Zellenübergabe eines RACH-losen Flusses (Random Access Channel Less) in einem Mobilkommunikationssystem der fünften Generation (5G) für ein Endgerät, das von einer Quellzelle zu einer Zielzelle übergeben werden muss, die Mehrstrahlkommunikation unterstützt,
wobei ein Quellzugangsnetzwerkgerät die Quellzelle bedient und ein Zielzugangsnetzwerkgerät die Zielzelle bedient, wobei das Verfahren Folgendes umfasst:
Erfassen (210), durch das Zielzugangsnetzwerkgerät, einer Nachricht zur Übergabevorbereitung, die von einer Zugangs- und Mobilitätsverwaltungsfunktion (AMF) über eine Schnittstelle der nächsten Generation (NG) gesendet wird, wobei die Nachricht zur Übergabevorbereitung einen Messungsbericht umfasst und der Messungsbericht Strahlmessungsinformationen enthält; und
Konfigurieren (220), durch das Zielzugangsnetzwerkgerät, gemäß den Strahlmessungsinformationen, mindestens eines Strahls, über den das Endgerät auf die Zielzelle zugreift, und einer unlizenzierten Uplink-Ressource auf jedem Strahl des mindestens einen Strahls;
wobei das Konfigurieren des mindestens einen Strahls gemäß den Strahlmessungsinformationen, der Bewegungsgeschwindigkeit des Endgerätes und dem durch das Endgerät gemessenen Abdeckungsbereich des Strahls der Zielzelle erfolgt;
wobei das Verfahren ferner Folgendes umfasst:
Konfigurieren, durch das Zielzugangsnetzwerkgerät, von Zeitbereichsinformationen der unlizenzierten Uplink-Ressource auf jedem von dem Endgerät verwendeten Strahl; und
wobei das Verfahren ferner Folgendes umfasst:
Senden, durch das Zielzugangsnetzwerkgerät, eines Übergabebefehls an ein Quellzugangsnetzwerkgerät, wobei der Übergabebefehl einen Identifikator des mindestens einen Strahls, die unlizenzierte Uplink-Ressource auf jedem Strahl des mindestens einen Strahls und die Zeitbereichsinformationen der unlizenzierten Uplink-Ressource auf jedem Strahl des mindestens einen durch das Endgerät verwendeten Strahls umfasst.

2. Verfahren nach Anspruch 1, wobei die Zeitbereichsinformationen mindestens eine der folgenden Informationen umfassen: eine Sub-Frame-(SF)-Seriennummer, eine System-Frame-Nummer (SFN), einen Bereich oder ein Zeitfenster.

3. Verfahren nach Anspruch 1 oder 2, wobei die Strahlmessungsinformationen Strahlidentifikationsinformationen und einen Messwert eines Strahls umfassen, der durch die Strahlidentifikationsinformationen identifiziert wird.

4. Zugangsnetzwerkgerät (600), das so ausgebildet ist, dass es eine Zellenübergabe eines RACH-losen Flusses (Random Access Channel Less) in einem Kommunikationssystem der fünften Generation der Mobilfunktechnologie (5G) für Endgeräte durchführt, die von einer Quellzelle an eine Zielzelle übergeben werden müssen, die eine Mehrstrahlkommunikation unterstützt,
wobei ein Quellzugangsnetzwerkgerät die Quellzelle bedient und das Zielzugangsnetzwerkgerät (600) die Zielzelle bedient, wobei das Zugangsnetzwerkgerät (600) Folgendes umfasst:
eine Kommunikationseinheit (610), die ausgebildet ist, um eine Nachricht zur Übergabevorbereitung zu erfassen, die von einer Zugangs- und Mobilitätsverwaltungsfunktion (AMF) über eine Schnittstelle der nächsten Generation (NG) gesendet wird, wobei die Nachricht zur Übergabevorbereitung einen Messungsbericht umfasst, wobei der Messungsbericht Strahlmessungsinformationen umfasst; und
eine Verarbeitungseinheit (620), die ausgebildet ist, um gemäß den Strahlmessungsinformationen mindestens einen Strahl, über den das Endgerät auf die Zielzelle zugreift, und eine unlizenzierte Uplink-Ressource auf jedem Strahl des mindestens einen Strahls zu konfigurieren,
wobei das Konfigurieren des mindestens einen Strahls gemäß den Strahlmessungsinformationen, der Bewegungsgeschwindigkeit des Endgerätes und dem durch das Endgerät gemessenen Abdeckungsbereich des Strahls der Zielzelle erfolgt;
wobei die Verarbeitungseinheit (620) ferner ausgebildet ist, um Zeitbereichsinformationen der unlizenzierten Uplink-Ressource für jeden durch das Endgerät verwendeten Strahl zu konfigurieren; und
wobei die Kommunikationseinheit (610) ferner ausgebildet ist, um einen Übergabebefehl an ein Quellzugangsnetzwerkgerät zu senden, wobei der Übergabebefehl einen Identifikator des mindestens einen Strahls, die unlizenzierte Uplink-Ressource auf jedem Strahl des mindestens einen Strahls und die Zeitbereichsinformationen der unlizenzierten Uplink-Ressource auf jedem Strahl des mindestens einen durch das Endgerät verwendeten Strahls umfasst.

5. Zugangsnetzwerkgerät (600) nach Anspruch 4, wobei die Zeitbereichsinformationen mindestens eine der folgenden Informationen umfassen: eine Sub-Frame-(SF)-Seriennummer, eine System-Frame-Nummer (SFN), einen Bereich oder ein Zeitfenster.

6. Zugangsnetzwerkgerät (600) nach Anspruch 4 oder 5, wobei die Strahlmessungsinformationen Strahlidentifikationsinformationen und einen Messwert eines Strahls umfassen, der durch die Strahlidentifikationsinformationen identifiziert wird.

## Revendications

1. Procédé de transfert intercellulaire d'un flux Sans Canal d'Accès Aléatoire, sans RACH, dans un système de communication à technologie de communication mobile de cinquième génération, 5G, pour un dispositif terminal devant être transféré d'une cellule source à une cellule cible prenant en charge une communication multifaisceaux, dans lequel un dispositif de réseau d'accès source dessert la cellule source et un dispositif de réseau d'accès cible dessert la cellule cible,
le procédé comprenant
l'acquisition (210), par le dispositif de réseau d'accès cible, d'un message de préparation de transfert envoyé par une Fonction de Gestion d'Accès et de Mobilité, AMF, par l'intermédiaire d'une interface de Nouvelle Génération, NG, le message de préparation de transfert comprenant un rapport de mesure, et le rapport de mesure comprenant des informations de mesure de faisceau ; et la configuration (220), par le dispositif de réseau d'accès cible, selon les informations de mesure de faisceau, d'au moins un faisceau par l'intermédiaire duquel le dispositif terminal accède à la cellule cible et à une ressource sans licence de liaison montante sur chaque faisceau dudit au moins un faisceau ; dans lequel la configuration dudit au moins un faisceau est fonction des informations de mesure de faisceau, de la vitesse de déplacement du dispositif terminal et de la portée de couverture du faisceau de la cellule cible mesurée par le dispositif terminal ;
dans lequel le procédé comprend en outre :
la configuration, par le dispositif de réseau d'accès cible, d'informations de domaine temporel de la ressource sans licence de liaison montante sur chaque faisceau utilisé par le dispositif terminal ; et
dans lequel le procédé comprend en outre :
l'envoi, par le dispositif de réseau d'accès cible, d'une commande de transfert à un dispositif de réseau d'accès source, la commande de transfert comprenant un identifiant dudit au moins un faisceau, la ressource sans licence de liaison montante sur chaque faisceau dudit au moins un faisceau, et les informations de domaine temporel de la ressource sans licence de liaison montante sur chaque faisceau dudit au moins un faisceau utilisé par le dispositif terminal.

2. Procédé selon la revendication 1, dans lequel les informations de domaine temporel comprennent au moins l'un d'un numéro de série de Sous-Trame, SF, d'un Numéro de Trame Système, SFN, d'une portée ou d'une fenêtre temporelle.

3. Procédé selon la revendication 1 ou 2, dans lequel les informations de mesure de faisceau comprennent des informations d'identification de faisceau et une valeur mesurée d'un faisceau qui est identifié par les informations d'identification de faisceau.

4. Dispositif de réseau d'accès (600), conçu pour effectuer un transfert intercellulaire d'un flux Sans Canal d'Accès Aléatoire, sans RACH, dans un système de communication à technologie de communication mobile de cinquième génération, 5G, pour un dispositif terminal devant être transféré d'une cellule source à une cellule cible prenant en charge une communication multifaisceaux, dans lequel un dispositif de réseau d'accès source dessert la cellule source et le dispositif de réseau d'accès (600) dessert la cellule cible,
le dispositif de réseau d'accès (600) comprenant :
une unité de communication (610), configurée pour acquérir un message de préparation de transfert envoyé par une Fonction de Gestion d'Accès et de Mobilité, AMF, par l'intermédiaire d'une interface de Nouvelle Génération, NG, le message de préparation de transfert comprenant un rapport de mesure, le rapport de mesure comprenant des informations de mesure de faisceau ; et
une unité de traitement (620), configurée pour configurer, selon les informations de mesure de faisceau, au moins un faisceau par l'intermédiaire duquel le dispositif terminal accède à la cellule cible et à une ressource sans licence de liaison montante sur chaque faisceau dudit au moins un faisceau, dans lequel la configuration dudit au moins un faisceau est fonction des informations de mesure de faisceau, de la vitesse de déplacement du dispositif terminal et de la portée de couverture du faisceau de la cellule cible mesurée par le dispositif terminal ;
dans lequel l'unité de traitement (620) est en outre configurée pour configurer des informations de domaine temporel de la ressource sans licence de liaison montante sur chaque faisceau utilisé par le dispositif terminal ; et
dans lequel l'unité de communication (610) est en outre configurée pour envoyer une commande de transfert à un dispositif de réseau d'accès source, la commande de transfert comprenant un identifiant dudit au moins un faisceau, la ressource sans licence de liaison montante sur chaque faisceau dudit au moins un faisceau, et les informations de domaine temporel de la ressource sans licence de liaison montante sur chaque faisceau dudit au moins un faisceau utilisé par le dispositif terminal.

5. Dispositif de réseau d'accès (600) selon la revendication 4, dans lequel les informations de domaine temporel comprennent au moins l'un d'un numéro de série de Sous-Trame, SF, d'un Numéro de Trame Système, SFN, d'une portée ou d'une fenêtre temporelle.

6. Dispositif de réseau d'accès (600) selon la revendication 4 ou 5, dans lequel les informations de mesure de faisceau comprennent des informations d'identification de faisceau et une valeur mesurée d'un faisceau qui est identifié par les informations d'identification de faisceau.
